# EUROPÄISCHE PATENTSCHRIFT

(11) **EP 2 862 756 B1**
(45) Veröffentlichungstag und Bekanntmachung des Hinweises auf die Patenterteilung: **17.08.2016**
(21) Anmeldenummer: 14002921.6
(22) Anmeldetag: 22.08.2014
(51) Int. Cl.: B60R 21/38

(54) **Verstellvorrichtung für eine Frontklappe und zugehöriges Kraftfahrzeug**
Adjusting device for a front flap and corresponding motor vehicle
Dispositif de réglage d'un volet avant et véhicule automobile associé

(30) Priorität: 21.10.2013 DE 102013017457
(43) Veröffentlichungstag der Anmeldung: 22.04.2015
(73) Patentinhaber: AUDI AG, 85045 Ingolstadt (DE)
(72) Erfinder: Kugler, Peter, 49186 Bad Iburg (DE); Dorfner, Wolfgang, DE - 85114 Buxheim (DE); Sternecker, Harald, DE - 92339 Beilngries (DE); Pfaller, Bernhard-Konrad, DE - 85095 Denkendorf (DE); Schindler, Manfred, DE - 85570 Markt Schwaben (DE)
(74) Vertreter: Mader, Wilfried

(56) Entgegenhaltungen:
- DE-U1- 20 106 478
- JP-A- 2009 090 908

## Beschreibung

Die Erfindung betrifft eine Verstellvorrichtung für eine Frontklappe mit einem Aktuator zum Anheben der Hinterkante der Frontklappe, wobei der Aktuator als Koppelgetriebe ausgebildet ist, umfassend einen ersten Antrieb mit einem drehfesten Hebel, der mit einer Schubstange gelenkig verbunden ist.

Es ist bereits bekannt, bei Frontklappen von Kraftfahrzeugen einen Antrieb vorzusehen, um die Frontklappe in bestimmten Situationen verstellen zu können. Zum Schutz von Fußgängern kann eine Frontktappe nach der Detektion eines Aufpralls aktiv angehoben werden, damit ein Teil der Aufprallenergie durch Deformation der Frontklappe aufgenommen werden kann. Derartige aktive Frontklappen werden zumeist vertikal nach oben und zusätzlich horizontal nach hinten verschoben. Wenn die Klappe hingegen nicht angehoben wird, steht wegen der steifen Unterstruktur des Fahrzeugs zumeist kein ausreichender Verformungsraum zur Verfügung.

Aus der DE 201 06 478 U1 ist eine Verstellvorrichtung für eine Frontklappe eines Kraftfahrzeugs mit einem Elektromotor, einer Betätigungswelle und einem Untersetzungsgetriebe nach dem Oberbegriff von Anspruch 1 bekannt. Die Verstellvorrichtung weist ferner einen Kraftspeicher auf, über den die Frontklappe unabhängig vom Elektromotor antreibbar ist. Das Untersetzungsgetriebe ist derart ausgebildet, dass die Betätigungswelle in einer Drehrichtung nur vom Kraftspeicher angetrieben wird und der Elektromotor die Betätigungswelle in der Gegendrehrichtung antreibt und dabei dem Kraftspeicher die Energie zuführt, die zum Antrieb der Betätigungswelle in Drehrichtung notwendig ist.

Aus der JP 2009 090 908 A ist eine Verstellvorrichtung für eine Frontklappe eines Kraftfahrzeugs bekannt. Bei dieser Verstellvorrichtung ist ein Aktuator über ein Gestänge gekoppelt, über das die Frontklappe angehoben werden kann.

Der Erfindung liegt die Aufgabe zugrunde, eine Verstellvorrichtung anzugeben, die erweiterte Verstellmöglichkeiten bietet.

Zur Lösung dieser Aufgabe ist bei einer Verstellvorrichtung der eingangs genannten Art erfindungsgemäß vorgesehen, dass der Aktuator einen zweiten Antrieb mit einem drehfesten Hebel, der mit einer Schubstange gelenkig verbunden ist, aufweist, wobei die beiden Schubstangen einen gemeinsamen Befestigungspunkt besitzen, über den sie mit der Frontklappe verbunden sind.

Die erfindungsgemäße Verstellvorrichtung umfasst somit zwei separat ansteuerbare Antriebe, die jeweils an ein Mehrgelenk angebunden sind, wobei beide Gelenke miteinander und zusätzlich mit der Frontklappe verbunden sind. Auf diese Weise wird eine Kinematik gebildet, die die für die gewünschte Verstellung der Frontklappe benötigten Verstellmöglichkeiten bietet. Bei den beiden Antrieben handelt es sich somit um Drehantriebe, durch die die beiden Hebel und die beiden Schubstangen koordiniert bewegt werden können, so dass die gewünschten Positionen der Frontklappe angefahren werden können.

Vorzugsweise umfassen der erste und zweite Antrieb der erfindungsgemäßen Verstellvorrichtung einen Elektromotor, wobei im Elektromotor-vorzugsweise ein Untersetzungsgetriebe zugeordnet ist. Durch die Wahl einer ausreichend hohen Drehzahl kann eine Verstellung der Frontklappe mittels der erfindungsgemäßen Verstellvorrichtung in einem äußerst kurzen Zeitraum erfolgen. Typischerweise wird für das Anfahren einer bestimmten Position lediglich ein Bruchteil einer Sekunde benötigt.

Bei der erfindungsgemäßen Verstellvorrichtung kann es vorgesehen sein, dass der gemeinsame Befestigungspunkt der beiden Schubstangen mit einem an der Frontktappe anbringbaren oder angebrachten Schenkel verbunden ist. Dementsprechend besitzt der gemeinsame Befestigungspunkt der beiden Schubstangen eine Lagerstelle an dem Schenkel, der wiederum an der Frontklappe befestigbar oder befestigt ist. Auf diese Weise kann die erfindungsgemäße Verstellvorrichtung als modulare, vormontierte Baugruppe ausgebildet sein, die einfach im Motorraum eines Kraftfahrzeugs montiert werden kann.

Es liegt auch im Rahmen der Erfindung, dass die erfindungsgemäße Verstellvorrichtung eine Steuerungseinrichtung aufweist oder damit verbindbar oder verbunden ist, die zum koordinierten Steuern des ersten und des zweiten Antriebs ausgebildet ist. Aufgrund der kinematischen Kopplung der beiden Antriebe ist es wichtig, dass beide Antriebe synchron gesteuert werden, um Zwangskräfte zu vermeiden.

Es liegt auch im Rahmen der Erfindung, dass die Steuerungseinrichtung der erfindungsgemäßen Verstellvorrichtung dazu ausgebildet ist, die Antriebe so anzusteuern, dass die Frontklappe in eine erhöhte und horizontal nach hinten verschobene Fußgängerschutzstellung oder in eine weiter erhöhte und weiter nach hinten verschobene Typschadenstellung bewegbar ist. Durch das Bewegen der Frontklappe in die Fußgängerschutzstellung wird unterhalb der Frontklappe ein Freiraum geschaffen, der bei einem Aufprall eines Fußgängers als Verformungsraum zur Verfügung steht. Dementsprechend kann auf diese Weise ein Aufprall eines Fußgängers, insbesondere ein Aufprall des Kopfes, auf eine harte Struktur vermieden werden. Dementsprechend kann mittels der erfindungsgemäßen Verstellvorrichtung die Gefahr schwerer Verletzungen signifikant verringert werden.

In der sogenannten Typschadenstellung ist die Frontklappe noch weiter angehoben und nach hinten, in Richtung zum Fahrzeugheck, verschoben. Wenn sich die Frontklappe in der Typschadenstellung befindet, wird die Gefahr von Beschädigungen der Frontklappe gesenkt.

In weiterer Ausgestaltung der Erfindung kann es vorgesehen sein, dass die Steuerungseinrichtung dazu ausgebildet ist, die Antriebe so anzusteuern, dass die Frontklappe in eine Wartungsstellung bewegbar ist, in der das hintere Ende der Frontklappe in einem karosseriefesten Widerlager abgestützt ist. Bei dieser Ausgestaltung kann mittels der erfindungsgemäßen Verstellvorrichtung ein Schwenken der Frontklappe in die Wartungsstellung erfolgen, ohne dass dazu weitere Komponenten benötigt werden.

Daneben betrifft die Erfindung ein Kraftfahrzeug. Das erfindungsgemäße Kraftfahrzeug zeichnet sich dadurch aus, dass es wenigstens eine erfindungsgemäße Verstellvorrichtung, vorzugsweise zwei an gegenüberliegenden Seiten des Motorraums angeordnete Verstellvorrichtungen aufweist.

Weitere Vorteile und Einzelheiten der Erfindung werden nachfolgend anhand eines-Ausführungsbeispiels unter Bezugnahme auf die Zeichnungen erläutert. Die Zeichnungen sind schematische Darstellungen und zeigen:
- Fig. 1: eine perspektivische Ansicht eines Ausführungsbeispiels einer erfindungsgemäßen Verstellvorrichtung,
- Fig. 2: die Rückseite der in Fig. 1 gezeigten Verstellvorrichtung,
- Fig. 3: eine Ansicht der Verstellvorrichtung von Fig. 1 von oben,
- Fig.4: die in einem Kraftfahrzeug angebrachte Verstellvorrichtung in eingefahrener Stellung,
- Fig. 5: die Verstellvorrichtung in der Fußgängerschutzstellung,
- Fig. 6: die Verstellvorrichtung in der Typschadenstellung,
- Fig. 7: eine Darstellung der Kinematik in der eingefahrenen Stellung,
- Fig. 8: eine Darstellung der Kinematik in der Fußgängerschutzstellung,
- Fig. 9: eine Darstellung der Kinematik in der Typschadenstellung, und
- Fig. 10: eine Darstellung der Kinematik, wenn sich die Frontklappe in einer Wartungsstellung befindet.

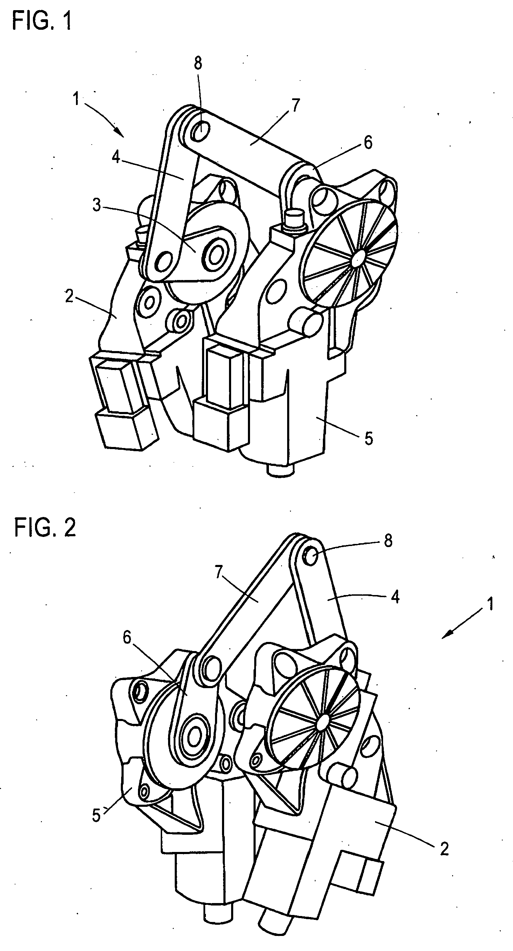

Die in Fig. 1 in einer perspektivischen Ansicht gezeigte Verstellvorrichtung 1 umfasst einen Aktuator, der als Koppelgetriebe ausgebildet ist, umfassend einen ersten Antrieb 2 mit einem drehfesten Hebel 3, der mit einer Schubstange 4 gelenkig verbunden ist. Daneben umfasst die Verstellvorrichtung 1 einen zweiten Antrieb 5 mit einem drehfesten Hebel 6, der mit einer Schubstange 7 gelenkig verbunden ist.

In Fig. 1 erkennt man, dass die beiden Schubstangen 4, 7 einen gemeinsamen Befestigungspunkt 8 besitzen, an dem sie mittels eines Bolzens miteinander verbunden sind. In dem dargestellten Ausführungsbeispiel sind die beiden Antriebe 2, 5 im Wesentlichen identisch aufgebaut. Jeder Antrieb 2, 5 umfasst einen Elektromotor, dem ein Untersetzungsgetriebe zugeordnet ist. Dementsprechend werden die beiden drehfest mit dem jeweiligen Antrieb verbundenen Hebel 3, 6 mit einer gegenüber der Motordrehzahl reduzierten Drehzahl gedreht.

Fig. 2 zeigt die Verstellvorrichtung 1 von der entgegengesetzten Seite, so dass sich der Antrieb 2 vor dem Antrieb 5 befindet. Die beiden Antriebe 2, 5 sind bezüglich ihrer Längsachsen leicht zueinander geneigt angeordnet, was durch die Einbausituation bedingt ist.

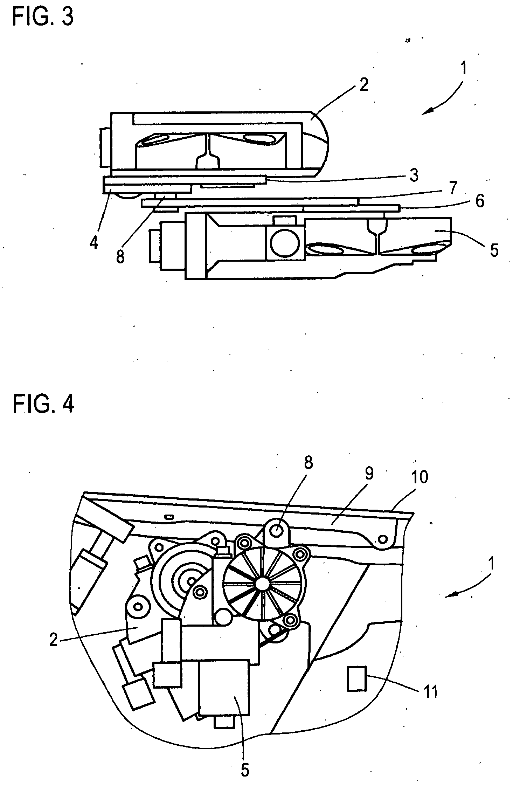

In der Draufsicht von Fig. 3 erkennt man, dass die beiden Antriebe 2, 5 parallel zueinander angeordnet sind. Dementsprechend sind auch die Hebel 3, 6 und die Schubstangen 4, 7 parallel zueinander angeordnet. Somit bewegen sich die beiden Hebel und die beiden Schubstangen im Wesentlichen entlang einer Ebene. Der Befestigungspunkt 8, der gleichzeitig als Verbindung zur Frontklappe dient, kann somit mittels der Verstellvorrichtung 1 entlang einer Ebene bewegt werden. In einem Kraftfahrzeug werden zwei derartige Verstellvorrichtungen 1 an gegenüberliegenden Seiten im Motorraum montiert, derart, dass sich die Befestigungspunkte 8 der beiden Verstellvorrichtungen an gegenüberliegenden Seiten in der Nähe des hinteren Endes der Frontklappe befinden.

Fig. 4 ist eine Seitenansicht und zeigt die Verstellvorrichtung 1, die im Motorraum eines Kraftfahrzeugs angeordnet ist. In der Zeichnung erkennt man, dass der Befestigungspunkt 8 bzw. der an dieser Stelle vorhandene Bolzen, gelenkig mit einem Schenkel 9 verbunden ist. Der Schenkel. 9 weist im Wesentlichen ein U-Profil auf. Im eingebauten Zustand ist der Schenkel 9 mit der Frontklappe 10 verbunden, die in Fig. 4 lediglich schematisch dargestellt ist.

Die Verstellvorrichtung 1 umfasst auch eine schematisch dargestellte Steuerungseinrichtung 11, die zum koordinierten Steuern der beiden Antriebe 2, 5 ausgebildet ist. Bedingt durch die Kopplung der beiden Schubstangen 4, 7 ist es erforderlich, die Antriebe 2, 5 koordiniert zu steuern, um Zwangskräfte zu vermeiden.

Fig. 4 zeigt die Verstellvorrichtung 1 in der normalen Position, in der die Frontklappe 10 geschlossen ist.

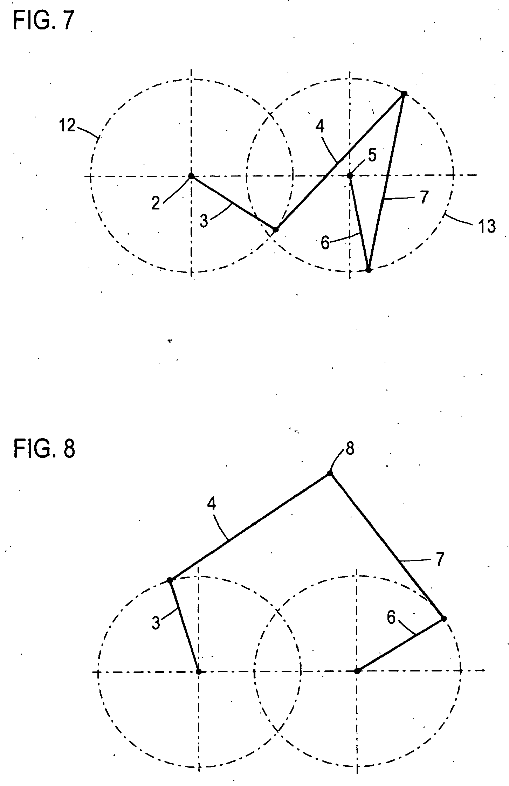

In Fig. 7 ist die entsprechende Kinematik dargestellt. Insbesondere erkennt man dort die Positionen der Hebel 3, 6 sowie die Positionen der Schubstangen 4, 7. Ebenso ist für jeden Antrieb 2, 5 ein Kreis 12, 13 dargestellt, der die Bewegungsbahn der drehbaren Hebel 3, 6 angibt.

In Fig. 7 erkennt man, dass in der Ausgangsstellung der Hebel 3 und die Schubstange 4 des Antriebs 2 näherungsweise rechtwinklig zueinander angeordnet sind, wohingegen der Hebel 6 und die Schubstange 7 des zweiten Antriebs 5 einen spitzen Winkel einschließen.

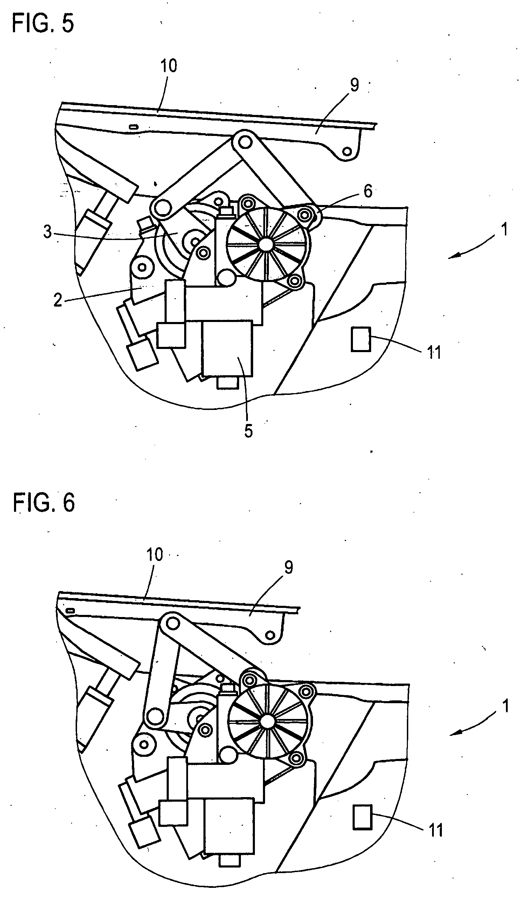

Fig. 5 zeigt die Verstellvorrichtung 1, nachdem diese aus der in Fig. 4 gezeigten Position in die sogenannte Fußgängerschutzstellung bewegt worden ist. Dazu sind die Hebel 3, 6 in der Ansicht von Fig. 5 gegen den Uhrzeigersinn gedreht worden. Dadurch ist der Schenkel 9 und dementsprechend auch die Frontklappe 10 sowohl vertikal nach oben als auch horizontal nach hinten, d. h. in der Ansicht von Fig. 5 nach links, verschoben werden. In dieser Fußgängerschutzstellung befindet sich unterhalb der Frontklappe 10 ein Freiraum, der bei einem Aufprall eines Fußgängers als Verformungsraum dient, so dass ein großer Teil der kinetischen Energie durch eine Verformung der Frontklappe 10 aufgenommen werden kann, so dass weniger schwerwiegende Verletzungen des Fußgängers zu erwarten sind.

In der zugehörigen kinematischen Darstellung von Fig. 8 erkennt man, dass der Hebel 3 und die Schubstange 4, die wie ein Pleuel wirkt, einen Winkel bilden, der etwas größer als ein rechter Winkel ist. In ähnlicher Weise bildet auch der Hebel 6 mit der Schubstange 7 näherungsweise einen rechten Winkel. Man erkennt zudem, dass auch die beiden sich im Befestigungspunkt 8 berührenden Schubstangen 4, 7 näherungsweise einen rechten Winkel zueinander einnehmen. Während die Steuerungseinrichtung 11 die beiden Antriebe 2, 5 ansteuert, kann die Frontklappe 10 aus der in Fig. 7 gezeigten Ausgangsstellung in weniger als einer halben Sekunde in die in Fig. 8 gezeigte Fußgängerschutzstellung bewegt werden.

Fig. 6 zeigt die Verstellvorrichtung 1, nachdem diese ausgehend von der eingefahrenen Stellung, die in Fig. 4 gezeigt ist oder ausgehend von der in Fig. 5 gezeigten Fußgängerschutzstellung in eine sogenannte Typschadenstellung bewegt worden ist. In dieser Typschadenstellung ist der Schenkel 9 im Vergleich zu der Fußgängerschutzstellung weiter nach hinten, d. h. in der Ansicht von Fig. 6 nach links verschoben. Die vertikale Position entspricht im Wesentlichen derjenigen der in Fig. 5 gezeigten Fußgängerschutzstellung. In dieser Position ist die vordere Kante der Frontklappe 10 noch weiter nach hinten verschoben, so dass die Gefahr von Beschädigungen verringert ist.

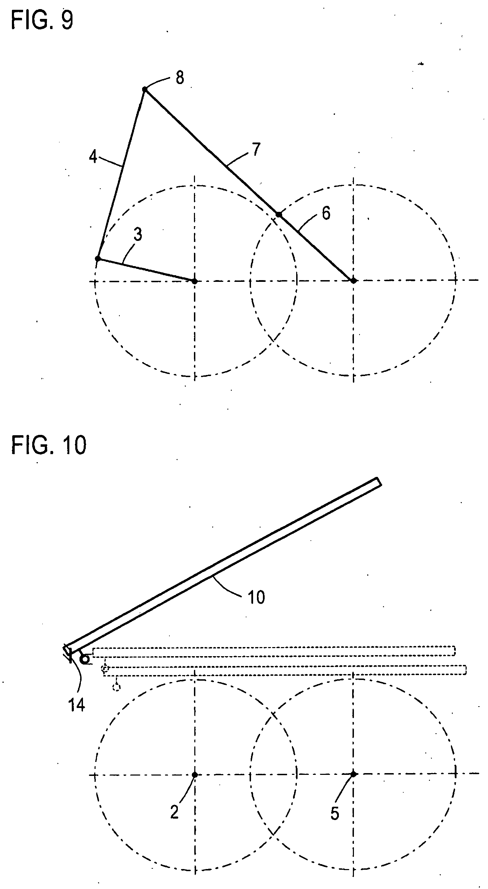

In der zugehörigen kinematischen Darstellung von Fig. 9 erkennt man, dass der Hebel 6 und die Schubstange 7 "gestreckt" sind, d. h. der Befestigungspunkt 8 befindet sich an der am weitesten entfernten Position von der Drehachse, die möglich ist. Der Hebel 3 und die Schubstange 4 bilden näherungsweise einen rechten Winkel miteinander. Falls von Umfeldsensoren detektiert worden ist, dass ein erwarteter Aufprall ausgeblieben ist, kann die Frontklappe 10 mittels der Antriebe 2, 6 aus der in Fig. 9 gezeigten Position wieder rückwärts in die in Fig. 5 gezeigte Fußgängerschutzstellung und weiter in die in Fig. 4 gezeigte Ausgangsstellung bewegt werden, was durch die Steuerungseinrichtung 11 gesteuert wird.

In Fig. 10 ist dargestellt, dass die Frontklappe 10 mittels der Antriebe 2, 5 angehoben und in ein frontklappenseitiges Widerlager 14 geschoben werden kann. Dazu wird die Frontklappe 10 mittels der Antriebe 2, 5 sowohl angehoben als auch nach hinten, in der Ansicht von Fig. 10 nach links, verschoben. Nach dem Erreichen dieser Schwenkposition wird ein Schloss der Frontklappe 10 freigegeben, durch die Antriebe 2, 5 wird die Frontklappe 10 dann in die gestrichelt dargestellte Wartungsstellung geschwenkt. In dieser geöffneten Stellung der Frontklappe 10 ist der Motorraum für Wartungs- oder Reparaturarbeiten zugänglich.

## Patentansprüche

1. Verstellvorrichtung (1) für eine Frontklappe (10) mit einem Aktuator zum Anheben der Hinterkante der Frontklappe (10), wobei der Aktuator als Koppelgetriebe ausgebildet ist, umfassend einen ersten Antrieb (2) mit einem drehfesten Hebel (3), der mit einer Schubstange (4) gelenkig verbunden ist,
**dadurch gekennzeichnet,**
**dass** der Aktuator einen zweiten Antrieb (5) mit einem drehfesten Hebel (6), der mit einer Schubstange (7) gelenkig verbunden ist, aufweist, wobei die beiden Schubstangen (4, 7) einen gemeinsamen Befestigungspunkt (8) besitzen, über den sie mit der Frontklappe (10) verbunden sind.

2. Verstellvorrichtung nach Anspruch 1,
**dadurch gekennzeichnet,**
**dass** der erste und der zweite Antrieb (2, 5) einen Elektromotor umfassen, wobei einem Elektromotor vorzugsweise ein Untersetzungsgetriebe zugeordnet ist.

3. Verstellvorrichtung nach Anspruch 1 oder 2,
**dadurch gekennzeichnet,**
**dass** der gemeinsame Befestigungspunkt (8) der beiden Schubstangen (4, 7) mit einem an der Frontklappe (10) anbringbaren oder angebrachten, vorzugsweise als U-Profil ausgebildeten, Schenkel (9) verbunden ist.

4. Verstellvorrichtung nach einem der vorangehenden Ansprüche,
**dadurch gekennzeichnet,**
**dass** sie eine Steuerungseinrichtung (11) aufweist oder damit verbindbar oder verbunden ist, die zum koordinierten Steuern des ersten und des zweiten Antriebs (2, 5) ausgebildet ist.

5. Verstellvorrichtung nach Anspruch 4,
**dadurch gekennzeichnet,**
**dass** die Steuerungseinrichtung (11) dazu ausgebildet ist, die Antriebe (2, 5) so anzusteuern, dass die Frontklappe (10) in eine erhöhte und horizontal nach hinten verschobene Fußgängerschutzstellung oder in eine weiter erhöhte und weiter nach hinten verschobene Typschadenstellung bewegbar ist.

6. Verstellvorrichtung nach Anspruch 4 oder 5,
**dadurch gekennzeichnet,**
**dass** die Steuerungseinrichtung (11) dazu ausgebildet ist, die Antriebe (2, 5) so anzusteuern, dass die Frontklappe (10) in eine Wartungsstellung bewegbar ist, in der das hintere Ende der Frontklappe (10) in einem karosseriefesten Widerlager (14) abgestützt ist.

7. Kraftfahrzeug,
**dadurch gekennzeichnet,**
**dass** es wenigstens eine Verstellvorrichtung (1) nach einem der vorangehenden Ansprüche, vorzugsweise zwei an gegenüberliegenden Seiten des Motorraums angeordnete Verstellvorrichtungen (1), aufweist.

## Claims

1. Adjustment device (1) for a bonnet (10) with an actuator for raising the rear edge of the bonnet (10), wherein the actuator is designed as a coupler mechanism, comprising a first drive (2) with a non-rotatable lever (3) having an articulated joint with a push rod (4), **characterised in that** the actuator has a second drive (5) with a non-rotatable lever (6) having an articulated joint with a push rod (7), wherein both push rods (4, 7) have a common attachment point (8) via which they are connected to the bonnet (10).

2. Adjustment device according to claim 1, **characterised in that** the first and second drive (2, 5) comprise an electric motor, wherein one electric motor preferably has a reduction gear associated with it.

3. Adjustment device according to claim 1 or 2, **characterised in that** the common attachment point (8) for both push rods (4, 7) is connected with an arm (9) that is mountable or mounted on the bonnet (10), preferably with a U-shaped design.

4. Adjustment device according to any one of the preceding claims, **characterised in that** it has a control device (11) or is attachable or attached to this, designed for coordinated control of the first and second drive (2, 5).

5. Adjustment device according to claim 4, **characterised in that** the control device (11) is designed to control the drives (2, 5) so that the bonnet (10) is movable into an elevated and horizontal, rearwardly-displaced pedestrian protection position or into a more raised and more rearwardly-displaced low-speed crash position.

6. Adjustment device according to claim 4 or 5, **characterised in that** the control device (11) is designed to control the drives (2, 5) so that the bonnet (10) is movable into a maintenance position in which the rear end of the bonnet (10) is supported in an abutment (14) fixed to the body.

7. Motor vehicle, **characterised in that** it has at least one adjustment device (1) according to any one of the preceding claims, preferably two adjustment devices (1) disposed on opposite side of the engine compartment.

## Revendications

1. Dispositif d'ajustement (1) pour un ouvrant frontal (10) avec un actionneur pour élever un bord arrière de l'ouvrant frontal (10), dans lequel l'actionneur est conçu comme un mécanisme de couplage, comprenant un premier entrainement (2) ayant un levier anti-rotation (3) connecté, de façon articulée, à une tige poussoir (4), **caractérisé en ce que** l'actionneur comprend un second entrainement (5) ayant un levier anti-rotation (6) connecté, de façon articulée, à une tige poussoir (7), dans lequel les deux tiges poussoirs (4, 7) sont connectées l'une avec l'autre par un point d'attache commun (8) qui est relié à l'ouvrant frontal (10).

2. Dispositif d'ajustement selon la revendication 1, **caractérisé en ce que** le premier et le second entrainement (2, 5) comprennent un moteur électrique, de préférence le moteur électrique comprend un démultiplicateur.

3. Dispositif d'ajustement selon la revendication 1 ou 2, **caractérisé en ce qu'**une patte (9), de préférence conçue avec un profil en forme de U, est placé ou attaché à l'ouvrant frontal (10) et est connecté au point d'attache commun (8) des deux tiges poussoirs (4, 7).

4. Dispositif d'ajustement selon l'une des revendications précédentes, **caractérisé en ce qu'**il comprend un dispositif de contrôle (11), qui peut également être monté en liaison ou est relié audit dispositif, le dispositif de contrôle étant configuré pour contrôler de façon coordonnée le premier et le second entrainements (2, 5).

5. Dispositif d'ajustement selon la revendication 4, **caractérisé en ce que** le dispositif de contrôle (11) est configuré pour contrôler le premier et le second entraînements (2, 5) de sorte à déplacer l'ouvrant frontal (10) dans une position de protection des piétons déplacée élevée ou horizontalement vers l'arrière, ou dans une position de dommage type déplacée encore plus élevée ou encore plus horizontalement vers l'arrière.

6. Dispositif d'ajustement selon la revendication 4 ou 5, **caractérisé en ce que** le dispositif de contrôle (11) est configuré pour contrôler le premier et le second entrainements (2, 5) de sorte à déplacer l'ouvrant frontal (10) dans une position d'attente, dans laquelle l'extrémité arrière de l'ouvrant frontal (10) est supportée sur une butée (14) fixe de la carrosserie.

7. Véhicule à moteur **caractérisé en ce qu'**il comprend au moins un dispositif d'ajustement (1) selon l'une des revendications précédentes, de préférence comprenant deux dispositif d'ajustement (1) agencés sur des côtés opposés du compartiment moteur.
